# EUROPEAN PATENT SPECIFICATION

(11) **EP 3 291 337 B1**
(45) Date of publication and mention of the grant of the patent: **03.04.2019**
(21) Application number: 17189361.3
(22) Date of filing: 05.09.2017
(51) Int. Cl.: H01M 4/133, H01M 4/04, H01M 4/1393, H01M 4/583, H01M 4/587

(54) **ELECTRODE, METHOD FOR FABRICATING THE SAME, AND METAL ION BATTERY EMPLOYING THE SAME**
ELEKTRODE, DEREN HERSTELLUNGSVERFAHREN UND IHRE ANWENDUNG IN EINER BATTERIE
ÉLECTRODE, PROCÉDÉ DE FABRICATION DE CELUI-CI, ET BATTERIE DE METAL ION L'EMPLOYANT

(30) Priority: 06.09.2016 US 201662383883 P; 16.12.2016 TW 105141734
(43) Date of publication of application: 07.03.2018
(73) Proprietor: Industrial Technology Research Institute, Chutung, Hsinchu 31040 (TW)
(72) Inventor: Chen, Kuang-Yao, 973 Hualien County (TW); Lin, Chun-Kai, 261 Yilan County (TW); Chiang, Chien-Chih, 247 New Taipei City (TW); Wu, Chun-Hsing, 106 Taipei City (TW); Yang, Chang-Chung, 114 Taipei City (TW)
(74) Representative: Michalski Hüttermann & Partner Patentanwälte mbB

(56) References cited:
- CN-A- 105 529 493
- JP-A- 2012 015 051
- US-A1- 2015 364 589

## Description

### TECHNICAL FIELD

The technical field relates to an electrode, to a method for fabricating the same, and to a metal ion battery employing the same.

### BACKGROUND

Aluminum is the most abundant metal on earth, and electronic devices made of aluminum have the advantage of costing little. An aluminum-based redox couple, which involves three electron transfers during the electrochemical charge/discharge reactions, provides storage capacity that in comparison with that of a single-electron lithium-ion battery. Additionally, because of its lower reactivity and flammability, such an aluminum-ion battery might offer significant safety improvements.

JP 2012015051 A describes a negative electrode for a lithium ion secondary battery, which includes: a negative electrode collector; and a negative electrode mixture layer arranged on the negative electrode collector and containing crystalline carbon and amorphous carbon as a negative electrode active material. In the negative electrode for a lithium ion secondary battery, the negative electrode mixture layer comprises a plurality of layers, the negative electrode mixture layer closer to the negative electrode collector has a higher content of the crystalline carbon, the negative electrode mixture layer farther from the negative electrode collector has a higher content of the amorphous carbon, and a content of the crystalline carbon at the layer closest to the negative electrode collector is higher than that of the amorphous carbon.

US 2015/364589 A1 describes a graphene-metal bonding structure, a method of manufacturing the graphene-metal bonding structure, and a semiconductor device including the graphene-metal bonding structure.

Given the foregoing enhanced theoretical capacity of an aluminum-ion battery, aluminum-ion battery constructions are desirable in that they may feasibly and reliably provide enhanced battery performance, such as enhanced capacity and discharge voltage.

### SUMMARY

The invention is defined by the features of the independent claims. Preferred embodiments are defined by the features of the dependent claims.

According to embodiments of the disclosure, the disclosure provides an electrode, such as an electrode of a metal-ion battery. The electrode includes a carbon substrate; a metal layer disposed on the carbon substrate; and a crystalline carbon material disposed between the carbon substrate and the metal layer. In particular, the crystalline carbon material is in direct contact with the carbon substrate or the metal layer.

According to other embodiments of the disclosure, the disclosure provides a method for fabricating the aforementioned electrode. The method includes providing a carbon substrate, wherein the carbon substrate has a first region and a second region; forming a metal layer on the first region, wherein the first region is disposed between the metal layer and the second region; and subjecting the carbon substrate and the metal layer to a thermal treatment, thereby converting the first region of the carbon substrate into a crystalline carbon material.

According to other embodiments of the disclosure, the disclosure provides a metal-ion battery. The metal-ion battery includes a first electrode, a first separator and a second electrode, wherein the second electrode is the aforementioned electrode, wherein the first separator is disposed between the first electrode and the second electrode.

A detailed description is given in the following embodiments with reference to the accompanying drawings.

### BRIEF DESCRIPTION OF THE DRAWINGS

FIG. 1 is a schematic view of an electrode according to embodiments of the disclosure.
FIG. 2 is a close-up schematic view of the region 2 in the electrode as shown in FIG. 1.
FIG. 3 is a close-up schematic view of the region 2 in the electrode according to other embodiment of the disclosure.
FIGs. 4-6 are schematic views of electrodes according to other embodiments of the disclosure.
FIG. 7 is a flow chart illustrating the steps for fabricating the electrode according to an embodiment.
FIGs 8A-8C are a series of diagrams showing the method for fabricating the electrode of the disclosure.
FIG. 9 is a schematic view of the metal-ion battery according to an embodiment of the disclosure.
FIG. 10 is a schematic view of the metal-ion battery according to another embodiment of the disclosure.
FIG. 11 is a transmission electron microscope (TEM) photograph showing the graphite electrode of Example 1.
FIG. 12 is a graph plotting voltage against time during charging and discharging of the metal-ion battery (1) of Example 1.
FIG. 13 is a graph showing the result of a cycling stability test during charging and discharging of the metal-ion battery (1) of Example 1.
FIG. 14 is a graph plotting voltage against time during charging and discharging of the metal-ion battery (2) of Example 2.
FIG. 15 is a graph showing the result of a cycling stability test during charging and discharging of the metal-ion battery (2) of Example 2.
FIG. 16 is a graph plotting voltage against time during charging and discharging of the metal-ion battery (3) of Example 3.
FIG. 17 is a graph showing the result of a cycling stability test during charging and discharging of the metal-ion battery (3) of Example 3.
FIG. 18 is a transmission electron microscope (TEM) photograph showing the carbon electrode of Comparative Example 1.
FIG. 19 shows an x-ray diffraction spectrum of the graphite electrodes of Examples 1 and 3 and carbon electrodes of Comparative Examples 1 and 2.

### DETAILED DESCRIPTION

In the following detailed description, for the purposes of explanation, numerous specific details are set forth in order to provide a thorough understanding of the disclosed embodiments. It will be apparent, however, that one or more embodiments may be practiced without these specific details. In other instances, well-known structures and devices are shown schematically in order to simplify the drawing.

The disclosure provides an electrode (such as a positive electrode of metal-ion battery) and a metal-ion battery employing the same. The electrode includes a carbon substrate, a metal layer disposed on the carbon substrate and a crystalline carbon material disposed between the carbon substrate and the metal layer. The carbon material of the carbon substrate (such as non-crystalline carbon material) in contact with the metal surface is converted into a crystalline carbon material by subjecting a metal layer disposed on a carbon substrate to a thermal treatment to form an orderly layered carbon material (crystalline carbon material, such as graphite or graphene) via solid-phase precipitation at high temperature, thereby obtaining an electrode with improved electrical characteristics and high conductivity. As a result, the capacity of the metal-ion battery employing the electrode of the disclosure is increased. In addition, according to embodiments of the disclosure, an active material layer can be formed on the metal layer via vapor deposition to increase the capacity of the whole electrode. The crystalline carbon material of the electrode of the disclosure can be affixed to the carbon substrate and the metal layer in the absence of an adhesive. Therefore, the performance of the electrode would not be deteriorated by the adhesive. Moreover, since the metal layer can be conformally formed on the surface of the carbon substrate, the obtained crystalline carbon material has the same specific surface area as that of the carbon substrate, when subjecting the carbon substrate and the metal layer to a thermal treatment to convert the carbon substrate (directly in contact with the metal layer) into the crystalline carbon material. Therefore, the obtained crystalline carbon material also has a high specific surface area, when the carbon substrate having a high specific surface area (such as carbon cloth or carbon fiber) is employed in fabricating the electrode.

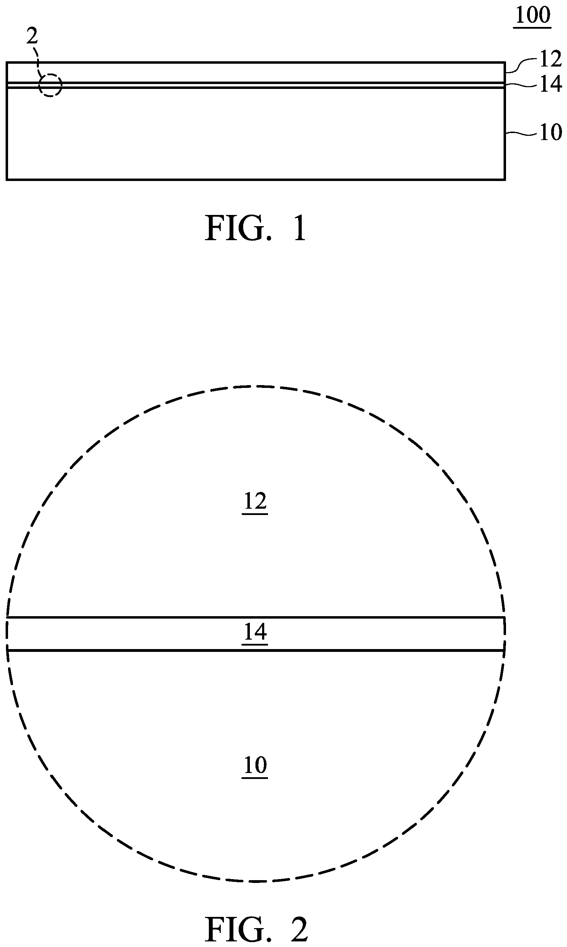

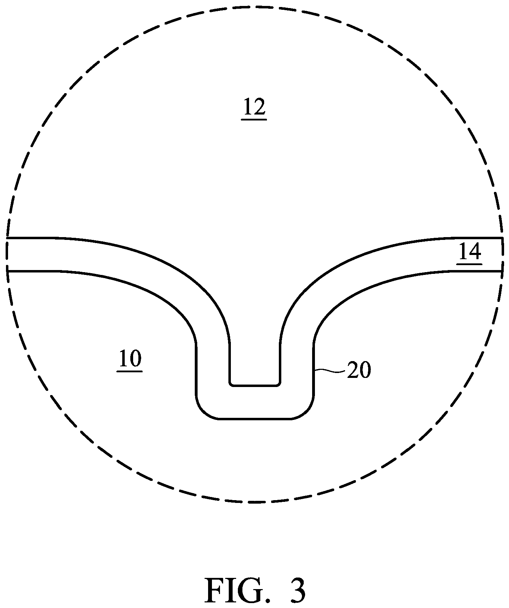

FIG. 1 is a schematic view of an electrode according to embodiments of the disclosure. The electrode 100 can have a carbon substrate 10, a metal layer 12, wherein the metal layer 12 is disposed on the carbon substrate; and a crystalline carbon material 14. As shown in FIG. 1, the metal layer 12 is continuous. FIG. 2 is a close-up schematic view of the region 2 in the electrode as shown in FIG. 1. As shown in FIG. 2, the crystalline carbon material 14 is disposed between the carbon substrate 10 and the metal layer 12. According to embodiments of the disclosure, the crystalline carbon material 14 is in direct contact with the carbon substrate 10 and the metal layer 12. According to embodiments of the disclosure, the carbon substrate can be non-crystalline carbon (i.e. disordered carbon) substrate. For example, the carbon substrate can be carbon cloth, carbon felt, or carbon paper. FIG. 3 is a close-up schematic view of the region 2 in the electrode according to other embodiment of the disclosure. The carbon substrate of the disclosure can have a plurality of holes 20, and the metal layer 12 can further fill into the holes 20. The crystalline carbon material 14 is filled into the holes 20 and is disposed between the carbon substrate 10 and the metal layer 12, as shown in FIG. 3. As a result, the obtained crystalline carbon material 14 can have high specific surface area. According to embodiments of the disclosure, the crystalline carbon material can be layered graphene, and the crystalline carbon material can have a thickness from about 1nm to 50µm, such as from about 10 nm to 50µm, or from about 1 nm to 5µm.

According to embodiments of the disclosure, suitable materials for the metal layer may include catalytic metal. When subjecting the catalytic metal to a thermal treatment, the carbon substrate (such as non-crystalline carbon material) contacting catalytic metal can be converted into an orderly layered carbon material (crystalline carbon material, such as graphite or graphene) via solid-phase precipitation. For example, suitable materials for the metal layer include Fe, Co, Ni, Cu, a combination thereof or an alloy thereof. According to other embodiments of the disclosure, the metal layer can consist of a plurality of metal particles. Suitable materials for the aforementioned metal particles include Fe, Co, Ni, Cu, a combination thereof or an alloy thereof. In addition, According to other embodiments of the disclosure, at least some of the metal particles can be covered by the crystalline carbon material.

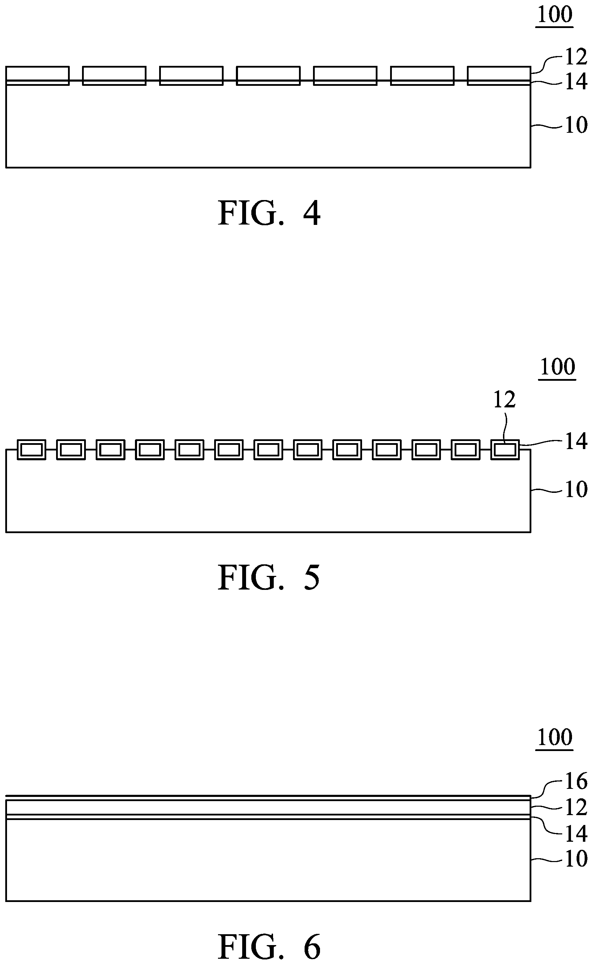

FIG. 4 is a schematic view of the electrode 100 according to an embodiment of the disclosure. As shown in FIG 4, the metal layer 12 of the disclosure can be segmented, and the crystalline carbon material 14 is still disposed between the carbon substrate 10 and the metal layer 12. The crystalline carbon material 14 is in direct contact with the carbon substrate 10 or/and the metal layer 12. As a result, the obtained crystalline carbon material 14 can be segmented. According to other embodiments of the disclosure, since the thickness of the metal layer, the temperature of the thermal treatment, and the duration of the thermal treatment are controlled in accordance with a specific range, at least a part of the segmented metal layer 12 can be covered by the crystalline carbon material 14 formed via solid-phase precipitation, as shown in FIG. 5.

FIG. 6 is a schematic view of the electrode 100 according to another embodiment of the disclosure. As shown in FIG. 6, the electrode 100 of the disclosure can further include an active material 16 disposed on the metal layer 12, wherein the active material 16 is formed on the metal layer 12 via deposition (such as chemical vapor deposition (CVD)). The active material 16 includes a layered active layer, or an agglomeration of the layered active layer. According to embodiments of the disclosure, the active material 16 can be intercalated carbon material, such as graphite (including natural graphite, artificial graphite, mesophase carbon microbeads, pyrolytic graphite, foaming graphite, flake graphite, or expanded graphite), graphene, carbon nanotube or a combination thereof.

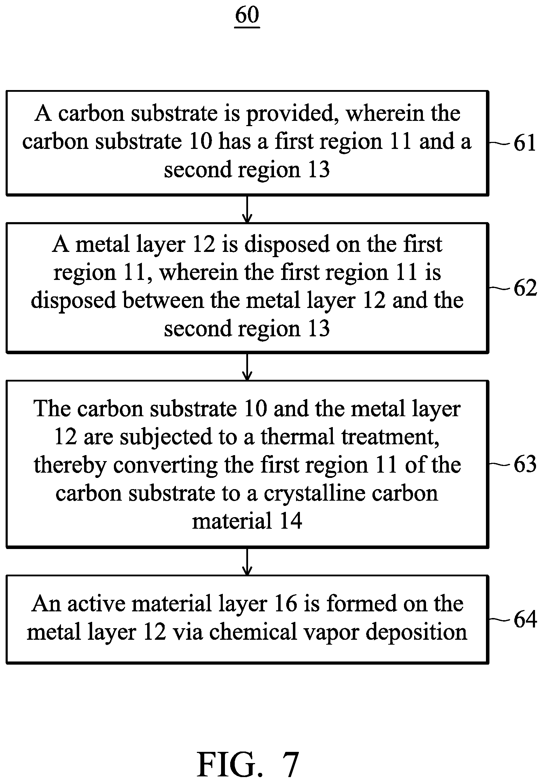

According to embodiments of the disclosure, the disclosure also provides a method for fabricating the aforementioned electrode. FIG. 7 is a flow chart illustrating the method 60 for fabricating the electrode according to an embodiment. It should be understood that additional steps can be provided before, during, and after the method 60, and some of the steps described can be replaced or eliminated for other embodiments of the method 60.

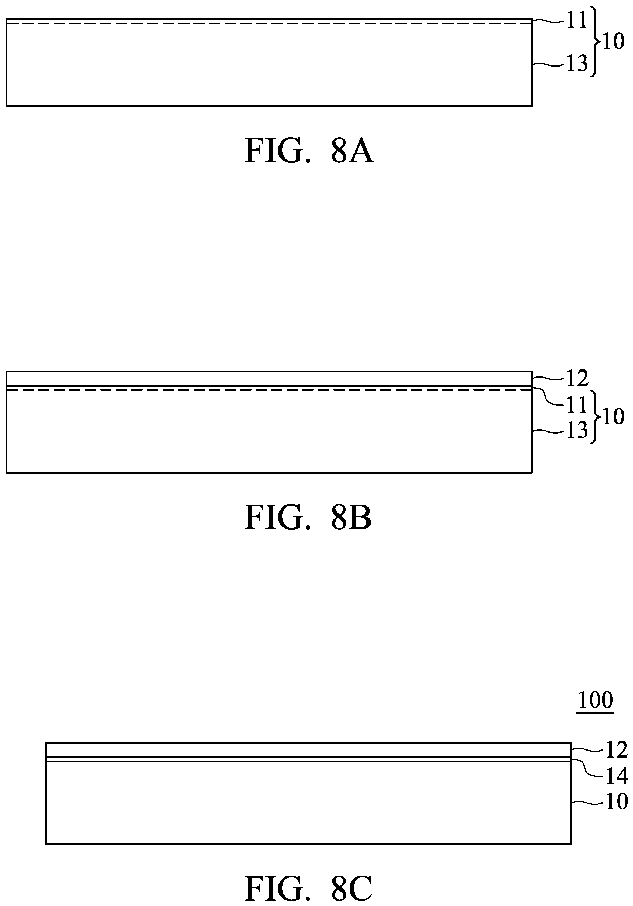

The initial step 61 of the method for fabricating the electrode of the disclosure provides a carbon substrate 10, wherein the carbon substrate 10 has a first region 11 and a second region 13, as shown in FIG. 8A. Next, a metal layer 12 is disposed on the first region 11 (steps 62). As shown in FIG. 8B, the first region 11 is disposed between the metal layer 12 and the second region 13. The method for forming the metal layer 12 can be, for example, sputtering, electron beam evaporation, thermal deposition, plating, or electroless plating. In particular, the formed metal layer 12 can completely or partially cover the carbon substrate 10. Namely, the metal layer 12 can be continuous or segmented. According to embodiments of the disclosure, the weight ratio of the metal layer 12 to the carbon substrate 10 can be from about 0.01 to 10, such as from about 0.04 to 10, or from about 0.01 to 5. Next, the carbon substrate 10 and the metal layer 12 are subjected to a thermal treatment (steps 63), thereby converting the first region 11 of the carbon substrate (in contact with the metal layer 12) into a crystalline carbon material 14, as shown in FIG. 8C. The thermal treatment can be performed in a muffle furnace under inert atmosphere (such as argon gas or nitrogen gas) or hydrogen atmosphere, wherein the thermal treatment temperature can be from about 800°C to 1150 °C. The time it takes to conduct the thermal treatment can be from about several minutes to about several hours (such as from about 30 minutes to about 2 hours). It should be noted that the weight of the obtained crystalline carbon material 14 is directly proportional to the duration of the thermal treatment. In addition, the weight of the obtained crystalline carbon material 14 is directly proportional to the area of the metal layer 12 which the carbon substrate 10 is in direct contact with. According to some embodiments of the disclosure, the method for fabricating the electrode of the disclosure can further include forming an active material layer 16 on the metal layer 12 (steps 64) via chemical vapor deposition (CVD), obtaining the electrode as shown in FIG. 6. It should be noted that a step of heating the substrate during the chemical vapor deposition (CVD) can be a substitute for the thermal treatment, providing that the temperature in the step of heating the substrate is from about 900°C to 1150°C.

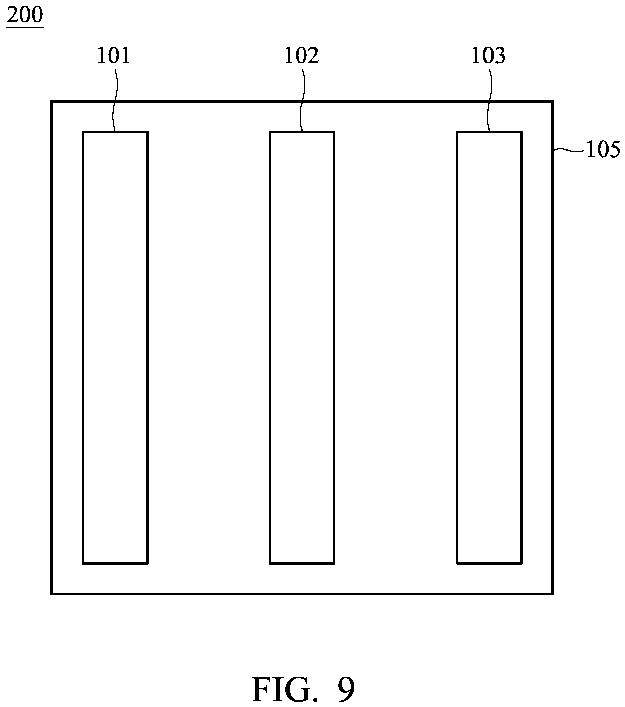

According to embodiments of the disclosure, the disclosure also provides a metal-ion battery. As shown in FIG. 9, the metal-ion battery 200 includes a first electrode 101, a first separator 102, and a second electrode 103, wherein second electrode 103 is the aforementioned electrode of the disclosure, and the first separator 102 is disposed between the first electrode 101 and the second electrode 103. The metal-ion battery 200 also includes an electrolyte 105, which is disposed between the first electrode 101 and the second electrode 103. The metal-ion battery 200 can be a rechargeable secondary battery, although primary batteries also are encompassed by the disclosure.

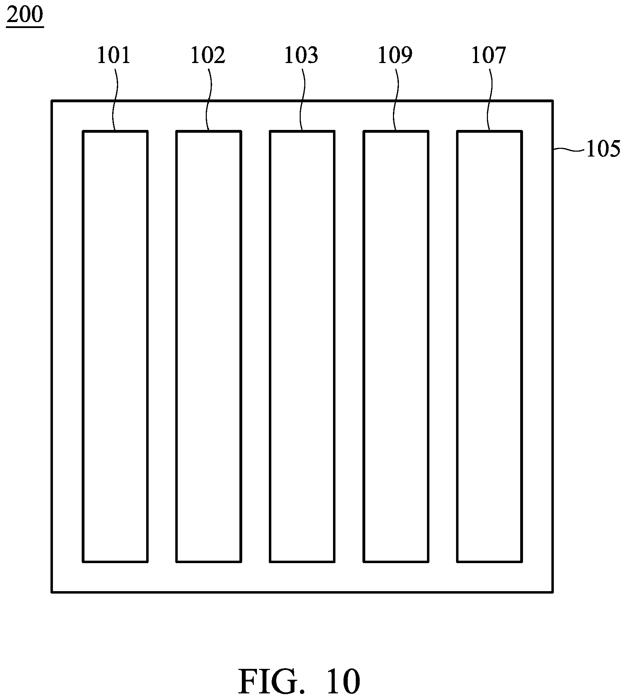

FIG. 10 is a schematic view of the metal-ion battery according to embodiments of the disclosure. According to other embodiments of the disclosure, the metal-ion battery 200 can further include a third electrode 107 and a second separator 109, wherein layers between the first electrode 101 and third electrode 107 are the first separator 102, the second electrode 103, and the second separator 109 in sequence. The electrolyte 105 can be disposed between the first electrode 101 and the third electrode 107.

According to embodiments of the disclosure, the metal-ion battery 200 can be an aluminum-ion battery, although other types of metal ion batteries are encompassed by the disclosure. The first metal electrode 101 and the third electrode 107 can include aluminum, such as a non-alloyed form of aluminum or an aluminum alloy. More generally, suitable materials for the first metal electrode 101 and the third electrode 107 may include one or more of an alkali metal (e.g., lithium, potassium, sodium, and so forth), an alkaline earth metal (e.g., magnesium, calcium, and so forth), a transition metal (e.g., zinc, iron, nickel, cobalt, and so forth), a main group metal or metalloid (e.g., aluminum, silicon, tin, and so forth), and a metal alloy of two or more of the foregoing elements (e.g., an aluminum alloy). The first separator 102 and the second separator 109 can mitigate against electrical shorting of the first electrode 101 and the second electrode 103, and the electrolyte 105 can support reversible deposition and dissolution (or stripping) of the second electrode 103, and reversible intercalation and de-intercalation of anions at the electrode 100. The electrolyte 105 can include an ionic liquid, which can support reversible redox reaction of a metal or a metal alloy included in the first electrode 101. For example, the electrolyte 105 can correspond to, or can include, a mixture of a metal halide (which is not an alkali halide) (such as aluminum halide) and an ionic liquid, and a molar ratio of the metal halide and the ionic liquid is at least or greater than about 1.1 or at least or greater than about 1.2, and is up to about 1.5, up to about 1.8, or more, such as where the aluminum halide is AlCl3, the ionic liquid is 1-ethyl- 3-methylimidazolium chloride, and the molar ratio of the aluminum chloride to 1-ethyl-3-methylimidazolium chloride is at least or greater than about 1.2, such as between 1.2 and 1.8. Examples of ionic liquids include choline chloride, alkali halide, alkylimidazolium salt, alkylpyridinium salt, alkylfluoropyrazolium salt, alkyltriazolium salt, aralkylammonium salt, alkylalkoxyammonium salt, aralkylphosphonium salt, aralkylsulfonium salt, or a combination thereof. According to embodiments of the disclosure, the electrolyte 105 can be a mixture of a metal halide (such as aluminum halide) and a solvent, wherein the solvent is urea, N-methylurea, dimethyl sulfoxide, methylsulfonylmethane, or a mixture thereof. The molar ratio of the aluminum chloride to the solvent is greater than or equal to about 1.2, such as between 1.2 and 1.8. An ionic liquid electrolyte can be doped (or have additives added) to increase electrical conductivity and lower the viscosity, or can be otherwise altered to yield compositions that favor the reversible electrodeposition of metals.

Below, exemplary embodiments will be described in detail with reference to the accompanying drawings so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

### EXAMPLES

### Example 1:

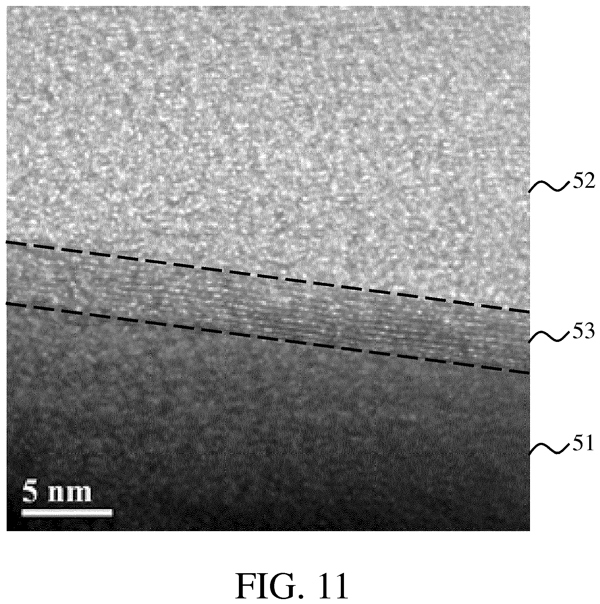

First, a carbon cloth (having a size of 70mm × 70mm and a thickness of 0.4mm) was provided. Next, a nickel layer (having a thickness of 1.5µm) was formed on the carbon cloth by an electroplating process, wherein the weight ratio between the nickel layer and the carbon cloth was 1:1. The electroplating process included the following steps. The carbon cloth (serving as an anode) was immersed in a nickel-metal-ion-containing electrolyte solution, wherein the nickel-metal-ion-containing electrolyte solution included nickel sulfate, nickel chloride, and boron acid. The electrolyte solution had a pH value of 4.6. Nickel served as a cathode. When the direct-current input voltage was applied, nickel metal was precipitated from the carbon cloth surface. The amount of nickel was directly proportional to the duration of the electroplating process. Finally, the obtained carbon cloth (having the nickel layer) was washed with hot water to remove the remaining electrolyte, and then was baked in an oven at 80°C. After, the carbon cloth having the nickel layer was subjected to a thermal treatment via a high-temperature vacuum furnace under an argon gas or hydrogen atmosphere. The temperature of the thermal treatment temperature was about 1000 °C and the duration of the thermal treatment was 30 minutes. After cooling, a graphite electrode was obtained. FIG. 11 is a transmission electron microscope (TEM) photograph showing the graphite electrode of Example 1. As shown in FIG. 11, in the graphite electrode, a graphite layer 53 (crystalline carbon material) was formed between the nickel layer 51 and carbon cloth 52 (non-crystalline carbon material).

Next, an aluminum foil (with a thickness of 0.025mm, manufactured by Alfa Aesar) was cut to obtain the aluminum electrode (having a size of 70mm × 70mm). Next, separators (of glass filter paper (two layers), with trade No. Whatman 934-AH) were provided. Next, the aluminum electrode, the separator, the graphite electrode, the separator, and the aluminum electrode were placed in sequence and sealed within an aluminum plastic pouch. Next, an electrolyte (including aluminum chloride (AlCl₃) and 1-ethyl-3-methylimidazolium chloride ([EMIm]Cl, wherein the molar ratio between AlCl₃ and [EMIm]Cl was about 1.3) was injected into the aluminum plastic pouch, obtaining the metal-ion battery (1).

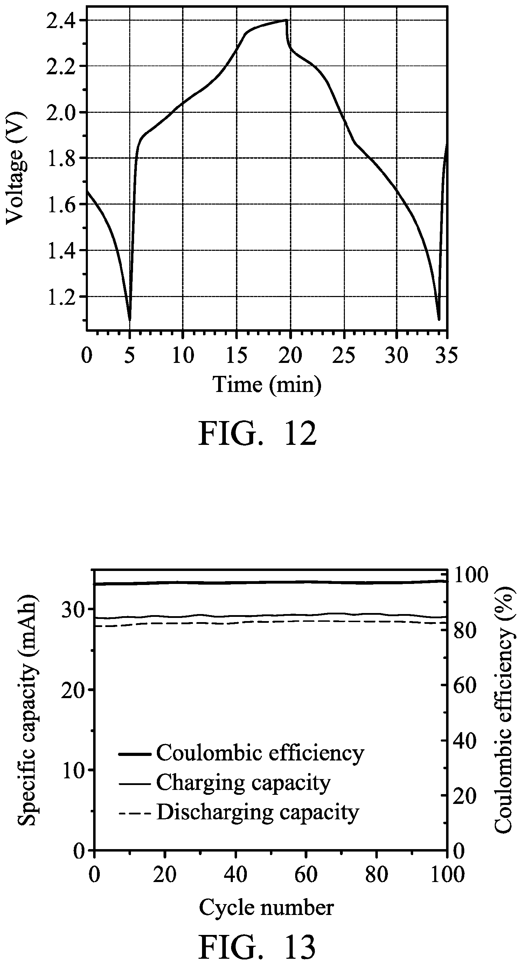

Next, the aluminum-ion battery (1) was then charged (to about 2.4 V) and discharged (to about 1.1 V) at a current density of about 200 mA/g by a battery analyzer to analyze the performance of the aluminum-ion battery. FIG. 12 is a graph plotting voltage against time during charging and discharging of the metal-ion battery (1) of Example 1, and FIG. 13 is a graph showing the result of a cycling stability test during charging and discharging of the metal-ion battery (1) of Example 1. As shown in FIG.13, the metal-ion battery (1) of Example 1 had a capacity of about 28.5mAh.

### Example 2:

First, a carbon cloth (having a size of 70mm × 70mm and a thickness of 0.4mm) was provided. Next, a nickel layer (having a thickness of 1.5µm) was formed on the carbon cloth by the process described in Example 1, wherein the weight ratio between the nickel layer and the carbon cloth was 1:1. Next, the carbon cloth having the nickel layer was subjected to a thermal treatment via a high-temperature vacuum furnace under an argon gas or hydrogen atmosphere. The temperature of the thermal treatment temperature was about 1000°C and the time of the thermal treatment was 30 minutes. Next, the carbon cloth was disposed in the high-temperature vacuum furnace and then methane gas was introduced into the high-temperature vacuum furnace. Thus, a graphite layer was formed on the nickel layer by chemical vapor deposition (CVD) (with a process temperature of about 1000°C). After performing the chemical vapor deposition for 30 minutes, a graphite electrode was obtained.

Next, an aluminum foil (with a thickness of 0.025mm, manufactured by Alfa Aesar) was cut to obtain the aluminum electrode (having a size of 70mm × 70mm). Next, separators (of glass filter paper (two layers), with trade No. Whatman 934-AH) were provided. Next, the aluminum electrode, the separator, the graphite electrode, the separator, and the aluminum electrode were placed in sequence and sealed within an aluminum plastic pouch. Next, an electrolyte (including aluminum chloride (AlCl₃) and 1-ethyl-3-methylimidazolium chloride ([EMIm]Cl, wherein the molar ratio between AlCl₃ and [EMIm]Cl was about 1.3) was injected into the aluminum plastic pouch, obtaining the metal-ion battery (2).

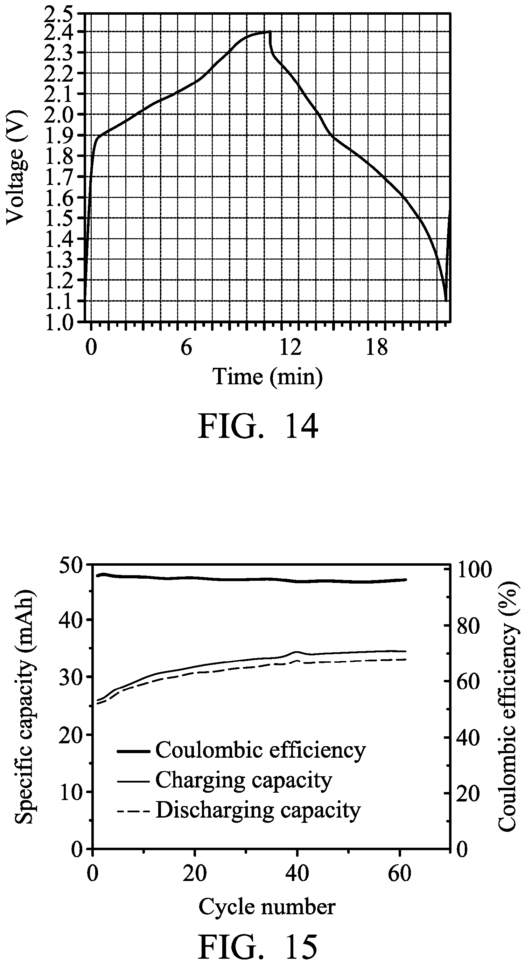

Next, the aluminum-ion battery (2) was then charged (to about 2.4 V) and discharged (to about 1.1 V) at a current density of about 200 mA/g by a battery analyzer to analyze the performance of the aluminum-ion battery. FIG. 14 is a graph plotting voltage against time during charging and discharging of the metal-ion battery (2) of Example 2, and FIG. 15 is a graph showing the result of a cycling stability test during charging and discharging of the metal-ion battery (2) of Example 2. As shown in FIG.15, the metal-ion battery (2) of Example 2 had a capacity of about 33.1mAh.

### Example 3:

First, a carbon cloth (having a size of 70mm × 70mm and a thickness of 0.4mm) was provided. Next, a nickel layer (having a thickness of 1.5µm) was formed on the carbon cloth by the process described in Example 1, wherein the weight ratio between the nickel layer and the carbon cloth was 1:1. Next, the carbon cloth having the nickel layer was heated at 1000°C. Next, a graphite layer was formed on the nickel layer by chemical vapor deposition (CVD) as described in Example 2. After performing the chemical vapor deposition for 60 minutes, a graphite electrode was obtained.

Next, an aluminum foil (with a thickness of 0.025mm, manufactured by Alfa Aesar) was cut to obtain the aluminum electrode (having a size of 70mm × 70mm). Next, separators (of glass filter paper (two layers), with trade No. Whatman 934-AH) were provided. Next, the aluminum electrode, the separator, the graphite electrode, the separator, and the aluminum electrode were placed in sequence and sealed within an aluminum plastic pouch. Next, an electrolyte (including aluminum chloride (AlCl₃) and 1-ethyl-3-methylimidazolium chloride ([EMIm]Cl, wherein the molar ratio between AlCl₃ and [EMIm]Cl was about 1.3) was injected into the aluminum plastic pouch, obtaining the metal-ion battery (3).

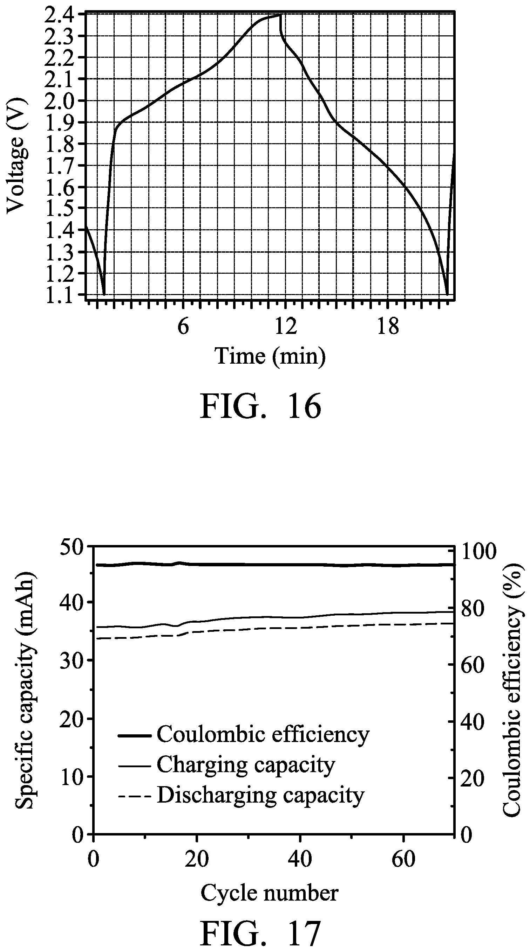

Next, the aluminum-ion battery (3) was then charged (to about 2.4 V) and discharged (to about 1.1 V) at a current density of about 200 mA/g by a battery analyzer to analyze the performance of the aluminum-ion battery. FIG. 16 is a graph plotting voltage against time during charging and discharging of the metal-ion battery (3) of Example 3, and FIG. 17 is a graph showing the result of a cycling stability test during charging and discharging of the metal-ion battery (3) of Example 3. As shown in FIG.17, the metal-ion battery (3) of Example 3 had a capacity of about 37.1mAh.

### Comparative Example 1:

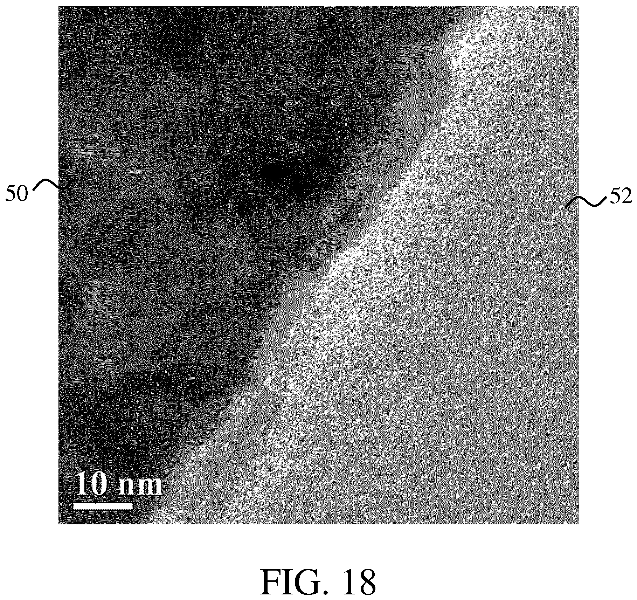

First, a carbon cloth (having a size of 70mm × 70mm and a thickness of 0.4mm) was provided. Next, a nickel layer (having a thickness of 1.5µm) was formed on the carbon cloth by the process described in Example 1, obtaining a carbon electrode. FIG. 18 is a transmission electron microscope (TEM) photograph showing the carbon electrode of Comparative Example 1. As shown in FIG.18, in the carbon electrode, the carbon layer (i.e. carbon cloth 52) adjacent to the nickel layer 51 is non-crystalline carbon material.

Next, an aluminum foil (with a thickness of 0.025mm, manufactured by Alfa Aesar) was cut to obtain the aluminum electrode (having a size of 70mm × 70mm). Next, separators (of glass filter paper (two layers), with trade No. Whatman 934-AH) were provided. Next, the aluminum electrode, the separator, the carbon electrode, the separator, and the aluminum electrode were placed in sequence and sealed within an aluminum plastic pouch. Next, an electrolyte (including aluminum chloride (AlCl₃) and 1-ethyl-3-methylimidazolium chloride ([EMIm]Cl, wherein the molar ratio between AlCl₃ and [EMIm]Cl was about 1.3) was injected into the aluminum plastic pouch, obtaining the metal-ion battery (4).

Next, the aluminum-ion battery (4) was then charged (to about 2.7 V) and discharged (to about 0.4 V) at a current density of about 200 mA/g by a battery analyzer to analyze the performance of the aluminum-ion battery. The result showed that the metal-ion battery (4) of Comparative Example 1 had no capacity.

### Comparative Example 2:

First, a carbon cloth (having a size of 70mm × 70mm and a thickness of 0.4mm) was provided. Next, a graphite layer was formed on the carbon cloth by chemical vapor deposition (CVD) as described in Example 2, obtaining a carbon electrode.

Next, an aluminum foil (with a thickness of 0.025mm, manufactured by Alfa Aesar) was cut to obtain the aluminum electrode (having a size of 70mm × 70mm). Next, separators (of glass filter paper (two layers), with trade No. Whatman 934-AH) were provided. Next, the aluminum electrode, the separator, the carbon electrode, the separator, and the aluminum electrode were placed in sequence and sealed within an aluminum plastic pouch. Next, an electrolyte (including aluminum chloride (AlCl₃) and 1-ethyl-3-methylimidazolium chloride ([EMIm]Cl, wherein the molar ratio between AlCl₃ and [EMIm]Cl was about 1.3) was injected into the aluminum plastic pouch, obtaining the metal-ion battery (5).

Next, the aluminum-ion battery (5) was then charged (to about 2.37 V) and discharged (to about 1.1 V) at a current density of about 50 mA/g by a battery analyzer to analyze the performance of the aluminum-ion battery. The result showed that the metal-ion battery (5) of Comparative Example 2 had no capacity.

### Example 4:

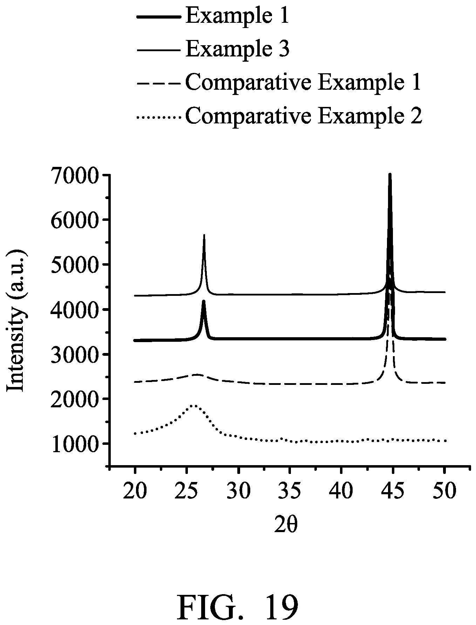

FIG. 19 shows an x-ray diffraction spectrum of the graphite electrodes of Examples 1 and 3 and carbon electrodes of Comparative Examples 1 and. As shown in FIG. 19, in Examples 1 and 3, a crystalline peak was appeared at a diffraction angle 2θ of 27 degrees. It means that the carbon material (of the carbon cloth of Examples 1 and 3) adjacent to the nickel layer was converted to graphite layer (i.e. crystalline carbon material) by means of the thermal treatment or the chemical vapor deposition as described in Examples 1 or 3. In contrast, in Comparative Examples 1 and 2, a non-crystalline peak was appeared at a diffraction angle 2θ of 27 degrees. It means that no graphite layer was formed.

Accordingly, due to the improved electrical characteristics and high conductivity of the electrode of the disclosure, the capacity of the metal-ion battery employing the electrode can be increased. In addition, in the electrode of the disclosure, a crystalline carbon material can be affixed to the carbon substrate and the metal layer in the absence of an adhesive. Therefore, the performance of the electrode would not be deteriorated by the adhesive.

It will be clear that various modifications and variations can be made to the disclosed methods and materials. It is intended that the specification and examples be considered as exemplary only, with the true scope of the disclosure being indicated by the following claims.

## Claims

1. An electrode (100), comprising:
a carbon substrate (10);
a metal layer (12), wherein the metal layer (12) is disposed on the carbon substrate (10), and wherein the metal layer (12) consists of a plurality of metal particles; and
a crystalline carbon material (14) disposed between the carbon substrate (10) and the metal layer (12), wherein the crystalline carbon material (14) is in direct contact with the carbon substrate or the metal layer.

2. The electrode as claimed in Claim 1, wherein
the metal layer (12) is continuous, or wherein
the metal layer (12) is segmented, and/or wherein
at least a part of the metal layer (12) is completely covered by the crystalline carbon material (14).

3. The electrode as claimed in Claims 1 or 2, wherein the carbon substrate (10) is non-crystalline carbon substrate.

4. The electrode as claimed in Claim 3, wherein the non-crystalline carbon substrate is carbon cloth, carbon felt, or carbon paper.

5. The electrode as claimed in Claim 3, wherein the non-crystalline carbon substrate has a plurality of holes.

6. The electrode as claimed in Claim 5, wherein the metal layer (12) fills into the holes.

7. The electrode as claimed in Claims 1-6, wherein the crystalline carbon material (14) is layered graphene or graphite.

8. The electrode as claimed in Claim 1, wherein
a material of the metal particles is Fe, Co, Ni, Cu, or a combination thereof, and/or wherein
at least some of the metal particles are covered by the crystalline carbon material.

9. The electrode as claimed in Claims 1-8, further comprising an active material (16) disposed on the metal layer (12), or comprising an active material (16) disposed on the metal layer (12), wherein the active material (16) is graphite, carbon nanotube, graphene, or a combination thereof.

10. A method for fabricating an electrode, comprising:
providing a carbon substrate (10), wherein the carbon substrate has a first region and a second region;
forming a metal layer (12) on the first region, wherein the first region is disposed between the metal layer and the second region; and
subjecting the carbon substrate and the metal layer to a thermal treatment, thereby converting the first region of the carbon substrate into a crystalline carbon material (14).

11. The method as claimed in Claim 10, after subjecting the carbon substrate (10) and the metal layer (12) to a thermal treatment, further comprising:
subjecting the carbon substrate (10) and the metal layer (12) to chemical vapor deposition to form an active material (16) on the metal layer (12).

12. A metal-ion battery, comprising:
a first electrode (101);
a first separator (102);
a second electrode (103), wherein the second electrode (103) is the electrode claimed in Claim 1, wherein the first separator (102) is disposed between the first electrode and the second electrode; and
an electrolyte (105) disposed between the first electrode and the second electrode.

13. The metal-ion battery as claimed in Claim 12, further comprising:
a third electrode (107); and
a second separator (109), wherein the second separator (109) is disposed between the second electrode (103) and the third electrode (107), and the second electrode (103) is disposed between the first separator (102) and the second separator (109), and wherein the electrolyte (105) is disposed between the first electrode (101) and the third electrode (107).

14. The metal-ion battery as claimed in Claims 12 and 13, wherein
the electrolyte comprises an ionic liquid and a metal halide, and wherein the ionic liquid is choline chloride, alkali halide, alkylimidazolium salt, alkylpyridinium salt, alkylfluoropyrazolium salt, alkyltriazolium salt, aralkylammonium salt, alkylalkoxyammonium salt, aralkylphosphonium salt, aralkylsulfonium salt, or a combination thereof, and/or wherein
the electrolyte comprises a solvent and a metal halide, and wherein the solvent is urea, N-methylurea, dimethyl sulfoxide, methylsulfonylmethane, or a mixture thereof.

## Patentansprüche

1. Elektrode (100) mit:
einem Kohlenstoffsubstrat (10);
einer Metallschicht (12), wobei die Metallschicht (12) auf dem Kohlenstoffsubstrat (10) angeordnet ist, und wobei die Metallschicht (12) aus mehreren Metallpartikeln besteht; und
einem kristallinen Kohlenstoffmaterial (14), das zwischen dem Kohlenstoffsubstrat (10) und der Metallschicht (12) angeordnet ist, wobei das kristalline Kohlenstoffmaterial (14) mit dem Kohlenstoffsubstrat oder mit der Metallschicht in direktem Kontakt steht.

2. Elektrode nach Anspruch 1, wobei
die Metallschicht (12) kontinuierlich ist, oder wobei
die Metallschicht (12) segmentiert ist, und/oder wobei
mindestens ein Teil der Metallschicht (12) vollständig mit dem kristallinen Kohlenstoffmaterial (14) bedeckt ist.

3. Elektrode nach Anspruch 1 oder 2, wobei das Kohlenstoffsubstrat (10) ein nichtkristallines Kohlenstoffsubstrat ist.

4. Elektrode nach Anspruch 3, wobei das nichtkristalline Kohlenstoffsubstrat Kohlenstoffgewebe, Kohlenstofffilz oder Kohlenstoffpapier ist.

5. Elektrode nach Anspruch 3, wobei das nichtkristalline Kohlenstoffsubstrat mehrere Löcher aufweist.

6. Elektrode nach Anspruch 5, wobei die Metallschicht (12) die Löcher füllt.

7. Elektrode nach einem der Ansprüche 1 bis 6, wobei das kristalline Kohlenstoffmaterial (14) geschichtetes Graphen oder Graphit ist.

8. Elektrode nach Anspruch 1, wobei
ein Material der Metallpartikel Fe, Co, Ni, Cu oder eine Kombination davon ist, und/oder wobei
mindestens einige der Metallpartikel mit dem kristallinem Kohlenstoffmaterial bedeckt sind.

9. Elektrode nach einem der Ansprüche 1 bis 8, ferner mit einem aktiven Material (16), das auf der Metallschicht (12) angeordnet ist, wobei das aktive Material (16) aus Graphit, Kohlenstoffnanoröhrchen, Graphen oder einer Kombination davon besteht.

10. Verfahren zum Herstellen einer Elektrode, mit den Schritten:
Bereitstellen eines Kohlenstoffsubstrats (10), wobei das Kohlenstoffsubstrat einen ersten Bereich und einen zweiten Bereich aufweist;
Ausbilden einer Metallschicht (12) auf dem ersten Bereich, wobei der erste Bereich zwischen der Metallschicht und dem zweiten Bereich angeordnet ist; und
Unterziehen des Kohlenstoffsubstrats und der Metallschicht einer thermischen Behandlung, wodurch der erste Bereich des Kohlenstoffsubstrats in ein kristallines Kohlenstoffmaterial (14) umgewandelt wird.

11. Verfahren nach Anspruch 10, ferner mit dem Schritt nach dem Unterziehen des Kohlenstoffsubstrats (10) und der Metallschicht (12) einer thermischen Behandlung:
Unterziehen des Kohlenstoffsubstrats (10) und der Metallschicht (12) einer chemischen Dampfabscheidung zum Ausbilden eines aktiven Materials (16) auf der Metallschicht (12).

12. Metallionenbatterie mit:
einer ersten Elektrode (101);
einem ersten Separator (102);
einer zweiten Elektrode (103), wobei die zweite Elektrode (103) die Elektrode nach Anspruch 1 ist, wobei der erste Separator (102) zwischen der ersten Elektrode und der zweiten Elektrode angeordnet ist; und
einem Elektrolyten (105), der zwischen der ersten Elektrode und der zweiten Elektrode angeordnet ist.

13. Metallionenbatterie nach Anspruch 12, ferner mit:
einer dritten Elektrode (107); und
einem zweiten Separator (109), wobei der zweite Separator (109) zwischen der zweiten Elektrode (103) und der dritten Elektrode (107) angeordnet ist, und wobei die zweite Elektrode (103) zwischen dem ersten Separator (102) und dem zweiten Separator (109) angeordnet ist, und wobei der Elektrolyt (105) zwischen der ersten Elektrode (101) und der dritten Elektrode (107) angeordnet ist.

14. Metallionenbatterie nach Anspruch 12 oder 13, wobei
der Elektrolyt eine ionische Flüssigkeit und ein Metallhalogenid aufweist, und wobei die ionische Flüssigkeit Cholinchlorid, Alkalihalogenid, Alkylimidazoliumsalz, Alkylpyridiniumsalz, Alkylfluoropyrazoliumsalz, Alkyltriazoliumsalz, Aralkylammoniumsalz, Alkylalkoxyammoniumsalz, Aralkylphosphoniumsalz, Aralkylsulfoniumsalz oder eine Kombination davon ist, und/oder wobei
der Elektrolyt ein Lösungsmittel und ein Metallhalogenid aufweist, und wobei das Lösungsmittel Harnstoff, N-Methylharnstoff, Dimethylsulfoxid, Methylsulfonylmethan oder eine Mischung davon ist.

## Revendications

1. Electrode (100) comprenant :
un substrat en carbone (10) ;
une couche de métal (12), la couche de métal (12) étant disposée sur le substrat en carbone (10), et la couche de métal (12) étant constituée d'une pluralité de particules de métal ; et
une matière en carbone cristallin (14) disposée entre le substrat en carbone (10) et la couche de métal (12), la matière en carbone cristallin (14) étant en contact direct avec le substrat en carbone ou la couche de métal.

2. Electrode selon la revendication 1, dans laquelle
la couche de métal (12) est continue, ou dans laquelle
la couche de métal (12) est segmentée, et/ou dans laquelle
au moins une partie de la couche de métal (12) est totalement recouverte par la matière en carbone cristallin (14).

3. Electrode selon la revendication 1 ou la revendication 2, dans laquelle le substrat en carbone (10) est un substrat en carbone non cristallin.

4. Electrode selon la revendication 3, dans laquelle le substrat en carbone non cristallin est un tissu en carbone, un feutre en carbone ou un papier en carbone.

5. Electrode selon la revendication 3, dans laquelle le substrat en carbone non cristallin a une pluralité de trous.

6. Electrode selon la revendication 5, dans laquelle la couche de métal (12) remplit les trous.

7. Electrode selon les revendications 1 à 6, dans laquelle la matière en carbone cristallin (14) est du graphène ou du graphite en couches.

8. Electrode selon la revendication 1, dans laquelle
une matière des particules de métal est le Fe, le Co, le Ni, le Cu ou une combinaison de ceux-ci, et/ou dans laquelle
au moins quelques particules de métal sont recouvertes par la matière en carbone cristallin.

9. Electrode selon les revendications 1 à 8, comprenant en outre une matière active (16) disposée sur la couche de métal (12), ou comprenant une matière active (16) disposée sur la couche de métal (12), la matière active (16) étant du graphite, du carbone en nanotubes, du graphène ou une combinaison de ceux-ci.

10. Procédé de fabrication d'une électrode comprenant :
la mise à disposition d'un substrat en carbone (10), le substrat en carbone ayant une première région et une seconde région ;
la formation d'une couche de métal (12) sur la première région, la première région étant disposée entre la couche de métal et la seconde région ; et
la soumission du substrat en carbone et de la couche de métal à un traitement thermique, convertissant ainsi la première région du substrat en carbone en une matière en carbone cristallin (14).

11. Procédé selon la revendication 10, après la soumission du substrat en carbone (10) et de la couche de métal (12) au traitement thermique, comprenant en outre :
la soumission du substrat en carbone (10) et de la couche de métal (12) à un dépôt chimique en phase vapeur pour former une matière active (16) sur la couche de métal (12).

12. Batterie type métal-ion comprenant :
une première électrode (101) ;
un premier séparateur (102) ;
une deuxième électrode (103), la deuxième électrode (103) étant l'électrode selon la revendication 1, le premier séparateur (102) étant disposé entre la première électrode et la deuxième électrode ; et
un électrolyte (105) disposé entre la première électrode et la deuxième électrode.

13. Batterie de type métal-ion selon la revendication 12, comprenant en outre :
une troisième électrode (107) ; et
un second séparateur (109), le second séparateur (109) étant disposé entre la deuxième électrode (103 et la troisième électrode (107), et la deuxième électrode (103) étant disposée entre le premier séparateur (102) et le second séparateur (109), et l'électrolyte (105) étant disposé entre la première électrode (101) et la troisième électrode (107).

14. Batterie de type métal-ion selon les revendications 12 et 13, dans laquelle
l'électrolyte comprend un liquide ionique et un halogénure de métal, et dans laquelle le liquide ionique est du chlorure de choline, un halogénure alcalin, un sel d'alkyl imidazolium, un sel d'alkyl pyridinium, un sel d'alkyl fluoropyrazolium, un sel d'alkyl triazolium, un sel d'aralkyl ammonium, un sel d'alkylalcoxy ammonium, un sel d'aralkyl phosphonium, un sel d'aralkyl sulfonium ou une combinaison de ceux-ci, et/ou dans laquelle
l'électrolyte comprend un solvant et un halogénure de métal et où le solvant est de l'urée, de la N-méthyl urée, du diméthyl sulfoxyde, du méthylsulfonyl méthane, ou un mélange de ceux-ci.
